# EUROPÄISCHE PATENTSCHRIFT

(11) **EP 3 147 117 B1**
(45) Veröffentlichungstag und Bekanntmachung des Hinweises auf die Patenterteilung: **06.11.2019**
(21) Anmeldenummer: 16189848.1
(22) Anmeldetag: 21.09.2016
(51) Int. Cl.: B31F 1/28

(54) **WELLPAPPEANLAGE**
CORRUGATED BOARD SYSTEM
MACHINE A CARTONS ONDULES

(30) Priorität: 24.09.2015 DE 102015218338
(43) Veröffentlichungstag der Anmeldung: 29.03.2017
(73) Patentinhaber: BHS Corrugated Maschinen- und Anlagenbau GmbH, 92729 Weiherhammer (DE)
(72) Erfinder: Mark, Maximilian, 95643 Tirschenreuth (DE); Zaruba, Sebastian, 92729 Weiherhammer (DE); Städele, Norbert, 92711 Parkstein (DE)
(74) Vertreter: Rau, Schneck & Hübner Patentanwälte Rechtsanwälte PartGmbB

(56) Entgegenhaltungen:
- CN-A- 1 586 882
- DE-A1- 2 745 854
- DE-A1- 10 312 601
- DE-A1-102011 087 685
- FR-A- 1 044 793

## Beschreibung

Die Erfindung betrifft eine Wellpappeanlage zum Herstellen von Wellpappe gemäß dem Oberbegriff des Anspruchs 1.

Wellpappeanlagen sind aus dem Stand der Technik durch offenkundige Vorbenutzung allgemein bekannt. Der Stand der Technik offenbart auch Wellpappeanlagen mit integrierten Druckvorrichtungen. Nachteilig an diesen bekannten Wellpappeanlagen ist oftmals, dass diese insgesamt eine enorme Länge in Maschinenlaufrichtung haben. Ferner ist die Druckqualität derartiger Wellpappeanlagen häufig nicht zufriedenstellend.

Aus der DE 103 12 601 A1 ist eine gattungsgemäße Wellpappeanlage bekannt. Die DE 27 45 854 A1, CN 1586882 A und FR 1 044 793 A offenbaren weitere Wellpappeanlagen. Die DE 10 2011 087 685 A1 beschäftigt sich mit dem Tintenstrahldrucken.

Der Erfindung liegt daher die Aufgabe zugrunde, die Nachteile des Standes der Technik zu überwinden. Insbesondere soll eine Wellpappeanlage bereitgestellt werden, die eine vergleichsweise geringe Länge in Maschinenlaufrichtung aufweist. Ferner soll die Druckqualität der Wellpappeanlage besonders hoch sein.

Diese Aufgabe wird erfindungsgemäß durch die in dem unabhängigen Anspruch 1 angegebenen Merkmale gelöst. Der Kern der Erfindung liegt darin, dass die Deckbahn der Wellpappebahn mittels einer Druckanordnung bedruckbar ist und in einer Vorrichtung zum Herstellen einer einseitig kaschierten Wellpappebahn mit einer Wellbahn verbunden, insbesondere verleimt, wird. Die Deckbahn ist günstigerweise eine äußere Bahn der fertigen Wellpappe(-bahn) und bei dieser von außen sichtbar.

Die sich zumindest bereichsweise über der Deckbahn-Abgabevorrichtung erstreckende Druckanordnung führt zu einer äußerst platzsparenden Anordnung der Druckanordnung. Im Allgemeinen liegt in herkömmlichen Herstellungshallen noch ein ausreichender Raum oberhalb der Deckbahn-Abgabevorrichtung für die Druckanordnung vor. Die Herstellungshallen begrenzen in den meisten Fällen die Länge der Wellpappeanlage.

Die Ausgestaltungen hinsichtlich des mindestens einen Traggestells führen zu einer äußerst hohen Druckqualität, da Schwingungen aus der Deckbahn-Abgabevorrichtung nicht unmittelbar auf die Druckanordnung bzw. auf die durch die Druckanordnung geführte Deckbahn übertragen werden. Das mindestens eine Traggestell ermöglicht so eine Schwingungsentkopplung zwischen der Deckbahn-Abgabevorrichtung und der Druckanordnung.

Es ist von Vorteil, wenn die Deckbahn während ihrer Förderung bedruckt wird.

Es ist von Vorteil, wenn die Druckanordnung ein Lackwerk zum, insbesondere dosierten bzw. vollflächigen, Auftragen von mindestens einer schützenden Überlackschicht auf die bedruckte Deckbahn umfasst. Die mindestens eine Überlackschicht hat ein äußerst hohes Haftvermögen, um an Bestandteilen von Wellpappebögen eine Verklebbarkeit zu gewährleisten. Sie ist vorzugsweise durch Mattlack gebildet.

Es ist zweckmäßig, wenn die Deckbahn-Abgabevorrichtung als Deckbahn-Abrollvorrichtung zum Abrollen einer Deckbahn ausgebildet ist.

Günstigerweise ist die Zwischenbahn-Abgabevorrichtung als Splicevorrichtung zum Abgeben einer endlosen Zwischenbahn ausgeführt.

Es ist von Vorteil, wenn die Kaschierbahn-Abgabevorrichtung als Kaschierbahn-Splicevorrichtung zum Abgeben einer endlosen Kaschierbahn ausgeführt ist.

Günstigerweise ist die fertige Wellpappebahn eine dreilagige Wellpappebahn. Alternativ weist diese mehr als drei, wie fünf oder sieben, Lagen bzw. Bahnen auf. Die Wellpappeanlage umfasst dann günstigerweise mehrere Vorrichtungen zum Herstellen einseitig kaschierter Wellpappebahnen.

Die Verbindungsvorrichtung ist vorzugsweise als Heiz- und Zugpartie bzw. Heiz-Andrück-Vorrichtung ausgeführt.

Die hier verwendeten Ausdrücke "vorgeordnet", "nachgeordnet", "stromaufwärts", "stromabwärts" oder dergleichen beziehen sich insbesondere auf die Förderrichtung der jeweiligen geförderten Bahn.

Weitere vorteilhafte Ausgestaltungen der Erfindung sind in den Unteransprüchen angegeben.

Die Ausgestaltung gemäß dem Unteranspruch 2 erlaubt eine äußerst wirtschaftliche und einfache Herstellung von Wellpappe. Die Deckbahn-Abgabevorrichtung umfasst dazu vorzugsweise zwei Deckbahn-Abrolleinheiten.

Es ist von Vorteil, wenn die Vorrichtung zum Herstellen einer einseitig kaschierten Wellpappebahn eine Riffeleinrichtung zum Riffeln der Zwischenbahn unter Bildung einer Wellbahn umfasst. Die Riffeleinrichtung umfasst günstigerweise zwei drehbar gelagerte Riffelwalzen, die einen Riffelspalt zum Hindurchführen der zu riffelnden Zwischenbahn ausbilden.

Günstigerweise umfasst die Vorrichtung zum Herstellen einer einseitig kaschierten Wellpappebahn eine Leimauftragseinrichtung zum Auftragen von Leim auf die Wellbahn. Die Leimauftragseinrichtung umfasst vorzugsweise eine drehbar gelagerte Leimauftragswalze zum Überführen von Leim aus einem Leimbehälter auf eine Wellung der Wellbahn. Es ist von Vorteil, wenn die Leimauftragseinrichtung außerdem eine gegen die Leimauftragswalze anliegende Leimdosierwalze zum Ausbilden einer gleichmäßigen Leimschicht auf der Leimauftragswalze aufweist.

Es ist zweckmäßig, wenn die Vorrichtung zum Herstellen einer einseitig kaschierten Wellpappebahn eine Anpresseinrichtung zum Anpressen der beleimten Wellbahn und Deckbahn aneinander umfasst. Diese Ausgestaltung sorgt für eine sichere Verbindung zwischen der Wellbahn und der Deckbahn.

Es ist von Vorteil, wenn die Anpresseinrichtung ein umlaufendes, glattes Anpressband zum Anpressen der beleimten Wellbahn und Deckbahn aneinander umfasst, wobei günstigerweise das Anpressband aus einem Metallmaterial gebildet ist. Das Anpressband ist günstigerweise um mindestens zwei Umlenkwalzen geführt.

Die Druckvorrichtung gemäß dem Unteranspruch 4 ist insbesondere imstande, mindestens einen Aufdruck auf die Deckbahn aufzudrucken. Der mindestens eine Aufdruck umfasst beispielsweise mindestens einen Buchstaben, eine Ziffer, ein anderes Zeichen, eine Grafik und/oder ein Foto. Der mindestens eine Aufdruck bedeckt günstigerweise mindestens bereichsweise eine Seite der Deckbahn, die bei der fertigen Wellpappebahn von außen sichtbar ist.

Gemäß dem Unteranspruch 5 ist die Druckvorrichtung als Inkjet-Druckvorrichtung ausgeführt. Die Inkjet-Druckvorrichtung ist insbesondere imstande, wasserbasierte Farbe bzw. Tinte zur Bedruckung der Deckbahn auszustoßen. Es ist von Vorteil, wenn die Inkjet-Druckvorrichtung ausgebildet ist, mindestens einen wasserbasierten Farbaufdruck auf der Deckbahn zu erzeugen.

Die Ausgestaltung gemäß dem Unteranspruch 6 erlaubt eine besonders gute und schnelle Weiterbearbeitung der bedruckten Deckbahn.

Die Ausgestaltung gemäß dem Unteranspruch 7 ergibt eine äußerst haltbare Verbindung zwischen der Deckbahn und der Zwischenbahn.

Die Deckbahn-Aufwickeleinrichtung gemäß dem Unteranspruch 8 ermöglicht ein Aufwickeln der, insbesondere bedruckten, Deckbahn. Die, insbesondere bedruckte, Deckbahn ist so in der Deckbahn-Aufwickeleinrichtung bevorratbar.

Die Ausgestaltung gemäß dem Unteranspruch 9 bewirkt insbesondere eine Schwingungsentkopplung zwischen der Deckbahn-Abgabevorrichtung bzw. der Wellpappeanlagen-Brücke und der Druckanordnung bzw. dem mindestens einen Traggestell, das die Druckanordnung zumindest teilweise trägt. Dies führt wieder zu einer äußerst hohen Druckqualität. Das mindestens eine Schwingungsentkopplungselement ist vorzugsweise nachgiebig. Es ist beispielsweise aus einem nachgiebigen Material und/oder durch mindestens einen Federkörper gebildet.

Gemäß Unteranspruch 10 ist eine Lackschicht vorgesehen, die vorteilhafterweise einen beschädigungsfreien Durchlauf der Wellpappebahn durch die erfindungsgemäße Wellpappeanlage ermöglicht und das Druckbild vor dem Hitzeeinfluss und der Druckbelastung beim Verklebeprozess mit der Wellpappebahn schützt.

Nachfolgend werden unter Bezugnahme auf die beigefügte Zeichnung bevorzugte Ausführungsformen der Erfindung beispielhaft beschrieben. Dabei zeigen:

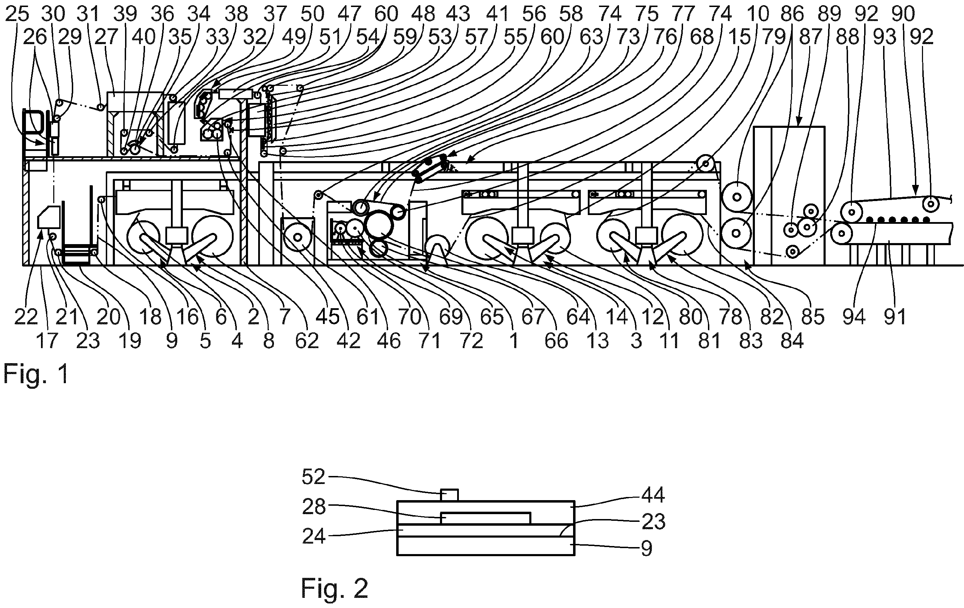

- Fig. 1: eine schematische Seitenansicht einer erfindungsgemäßen Wellpappeanlage,
- Fig. 2: einen vereinfachten, nicht maßstäblichen Schnitt durch eine mit der in Fig. 1 dagestellten Wellpappeanlage erzeugte Wellpappebahn,
- Fig. 3: einen Ausschnitt einer erfindungsgemäßen Wellpappeanlage gemäß Fig. 1, wobei dort das Traggestell gegenüber der Wellpappeanlagen-Brücke schwingungsentkoppelt ist.

Eine Wellpappeanlage umfasst eine Vorrichtung 1 zum Herstellen einer einseitig kaschierten Wellpappebahn.

Der Vorrichtung 1 zum Herstellen einer einseitig kaschierten Wellpappebahn sind eine Deckbahn-Splicevorrichtung 2 und eine Zwischenbahn-Splicevorrichtung 3 vorgeordnet.

Die Deckbahn-Splicevorrichtung 2 umfasst zum Abrollen einer endlichen ersten Deckbahn 4 von einer ersten Deckbahnrolle 5 eine erste Abrolleinheit 6 und zum Abrollen einer endlichen zweiten Deckbahn von einer zweiten Deckbahnrolle 7 eine zweite Abrolleinheit 8. Die endliche erste Deckbahn 4 und die endliche zweite Deckbahn werden zum Bereitstellen einer endlosen Deckbahn 9 mittels einer nicht dargestellten Verbinde- und Schneideeinheit der Deckbahn-Splicevorrichtung 2 miteinander verbunden.

Die Zwischenbahn-Splicevorrichtung 3 ist entsprechend der Deckbahn-Splicevorrichtung 2 ausgebildet. Diese umfasst zum Abrollen einer endlichen ersten Zwischenbahn 10 von einer ersten Zwischenbahnrolle 11 eine dritte Abrolleinheit 12 und zum Abrollen einer endlichen zweiten Zwischenbahn von einer zweiten Zwischenbahnrolle 13 eine vierte Abrolleinheit 14. Die endliche erste Zwischenbahn 10 und die endliche zweite Zwischenbahn werden zum Bereitstellen einer endlosen Zwischenbahn 15 mittels einer nicht dargestellten Verbinde- und Schneideeinheit der Zwischenbahn-Splicevorrichtung 3 miteinander verbunden.

Die endlose Deckbahn 9 wird über eine erste Umlenkrolle 16, die stromabwärts in Bezug auf die Förderung der endlosen Deckbahn 9 zu der Deckbahn-Splicevorrichtung 2 und benachbart zu dieser angeordnet ist, nach unten in Richtung auf einen Untergrund bzw. Boden 17 geführt, auf dem die Wellpappeanlage steht.

Die endlose Deckbahn 9 ist dann um eine zweite Umlenkrolle 18 geführt und verläuft stromabwärts zu dieser im Wesentlichen parallel unterhalb eines Zutrittspodests 19. Sie verläuft dort im Wesentlichen benachbart zu dem Untergrund 17.

Stromabwärts zu dem am Boden stehenden Zutrittspodest 19 wird die endlose Deckbahn 9 über eine dritte und vierte Umlenkrolle 20 bzw. 21 in eine Vorbeschichtungs-Auftragsvorrichtung 22 geführt, die der endlosen Deckbahn 9 zugeordnet ist und auf eine Außenseite 23 der endlosen Deckbahn 9 eine flächige Vorbeschichtung 24 aufbringt. Die Vorbeschichtungs-Auftragsvorrichtung 22 ist seitlich neben der Deckbahn-Splicevorrichtung 2 angeordnet. Stromabwärts zu der dritten Umlenkrolle 20 läuft die endlose Deckbahn 9 nach oben.

Stromabwärts zu der Vorbeschichtungs-Auftragsvorrichtung 22 ist der endlosen Deckbahn 9 eine Vorbeschichtungs-Trocknungsvorrichtung 25 zugeordnet, die die außenseitig mit der Vorbeschichtung 24 versehene, endlose Deckbahn 9 bzw. die Vorbeschichtung 24 trocknet. Die Vorbeschichtungs-Trocknungsvorrichtung 25 hat zwei hintereinander angeordnete bzw. in Reihe angeordnete Vorbeschichtungs-Trocknungseinrichtungen 26. Die Vorbeschichtungs-Trocknungsvorrichtung 25 ist seitlich oberhalb der Deckbahn-Splicevorrichtung 2 angeordnet.

Stromabwärts zu der Vorbeschichtungs-Trocknungsvorrichtung 25 ist der endlosen Deckbahn 9 eine Inkjet-Druckvorrichtung 27 zugeordnet, die außenseitig auf die endlose Deckbahn 9 bzw. auf die getrocknete Vorbeschichtung 24 mindestens einen Aufdruck 28 aufdruckt. Die Vorbeschichtung 24 befindet sich somit zwischen dem mindestens einen Aufdruck 28 und der endlosen Deckbahn 9. Der mindestens eine Aufdruck 28 ist günstigerweise ein wasserbasierter Farbaufdruck. Die endlose Deckbahn 9 ist von der Vorbeschichtungs-Trocknungsvorrichtung 25 über eine fünfte, sechste und siebte Umlenkrolle 29, 30 bzw. 31 zu der Inkjet-Druckvorrichtung 27 geführt. Die Inkjet-Druckvorrichtung 27 ist oberhalb der Deckbahn-Splicevorrichtung 2 angeordnet und überdeckt diese bereichsweise.

Stromabwärts zu der Inkjet-Druckvorrichtung 27 ist der endlosen Deckbahn 9 eine Inkjetdruck-Trocknungsvorrichtung 32 zugeordnet, die die bedruckte endlose Deckbahn 9 bzw. deren mindestens einen Aufdruck 28 trocknet. Zwischen der Inkjet-Druckvorrichtung 27 und der Inkjetdruck-Trocknungsvorrichtung 32 befindet sich eine achte Umlenkrolle 33, die die endlose Deckbahn 9 um etwa 90° nach unten umlenkt. Die Inkjetdruck-Trocknungsvorrichtung 32 erstreckt sich im Wesentlichen senkrecht zu der Inkjet-Druckvorrichtung 27. Sie ist oberhalb der Deckbahn-Splicevorrichtung 2 angeordnet.

Stromabwärts zu der Inkjetdruck-Trocknungsvorrichtung 32 ist der endlosen Deckbahn 9 eine Corona-Vorbehandlungsvorrichtung 34 zugeordnet, die eine Corona-Trägerwalze 35 und mindestens eine benachbart zu dieser angeordnete Elektrode 36 umfasst. Um die Corona-Trägerwalze 35 wird die endlose Deckbahn 9 geführt. Die endlose Deckbahn 9 läuft dabei durch einen Spalt, der durch die Corona-Trägerwalze 35 und die mindestens eine Elektrode 36 gebildet ist. Durch die Corona-Vorbehandlungsvorrichtung 34 wird die endlose Deckbahn 9 einer elektrischen Corona-Entladung ausgesetzt, was zu einer Oxidation deren Oberfläche führt. Dies ergibt höhere Punktzuwächse bei einem Farbauftrag bzw. bei einem Bedrucken. Die Haftung einer Druckfarbe auf der endlosen Deckbahn 9 wird so verbessert. Die endlose Deckbahn 9 ist von der Inkjetdruck-Trocknungsvorrichtung 32 über eine neunte, zehnte, elfte und zwölfte Umlenkrolle 37, 38, 39 bzw. 40 geführt, sodass die Corona-Vorbehandlungsvorrichtung 34 unterhalb der Inkjet-Druckvorrichtung 27 angeordnet ist. Die Corona-Vorbehandlungsvorrichtung 34 ist zwischen der Inkjet-Druckvorrichtung 27 und der Deckbahn-Splicevorrichtung 2 angeordnet.

Stromabwärts zu der Corona-Vorbehandlungsvorrichtung 34 ist der endlosen Deckbahn 9 eine erste Feuchte-Messeinrichtung 41 zugeordnet, die die Feuchtigkeit bzw. Feuchte der endlosen, bedruckten und getrockneten Deckbahn 9 misst. Die Messung erfolgt günstigerweise kapazitiv in einem Hochfrequenzstreufeld.

Zwischen der Corona-Vorbehandlungsvorrichtung 34 und der ersten Feuchte-Messeinrichtung 41 befindet sich eine dreizehnte Umlenkrolle 42, die die endlose Deckbahn 9 um etwa 90° nach oben umlenkt.

Stromabwärts zu der ersten Feuchte-Messeinrichtung 41 ist der endlosen Deckbahn 9 ein Lackwerk 43 zum vollflächigen Auftragen mindestens einer transparenten Überlackschicht 44 außenseitig auf die endlose Deckbahn 9 zugeordnet. Der mindestens eine Aufdruck 28 befindet sich so zwischen der mindestens einen Überlackschicht 44 und der Vorbeschichtung 24. Die mindestens eine Überlackschicht 44 bedeckt den mindestens einen Aufdruck 28 vollflächig und liegt an diesem direkt an. Die mindestens eine Überlackschicht 44 ist günstigerweise durch Mattlack gebildet, der auf Wasser basiert und auch als Wasserlack bzw. Dispersionslack bezeichnet wird. Das Lackwerk 43 hat dazu mindestens eine Überlack-Auftragswalze 45, die Lack aus einem Lackbehälter auf die endlose Deckbahn 9 aufträgt. Das Lackwerk 43 umfasst außerdem eine stehende Überlack-Dosierwalze 48, die zu der Überlack-Auftragswalze 45 winkelgenau zugestellt ist, um auf dieser für einen gleichmäßigen Überlackfilm zu sorgen. Andere Lackwerke sind alternativ einsetzbar.

Zwischen der ersten Feuchte-Messeinrichtung 41 und dem Lackwerk 43 befindet sich eine dreizehnte Umlenkrolle 46, die die endlose Deckbahn 9 in Richtung auf die Inkjetdruck-Trocknungsvorrichtung 32 umlenkt. Das Lackwerk 43 ist oberhalb der Deckbahn-Splicevorrichtung 2 angeordnet.

Stromabwärts zu dem Lackwerk 43 ist der endlosen Deckbahn 9 eine zweite Feuchte-Messeinrichtung 47 zugeordnet, die entsprechend der ersten Feuchte-Messeinrichtung 41 ausgeführt ist und die Feuchtigkeit bzw. Feuchte der lackierten endlosen Deckbahn 9 oder die Lackschichtdicke misst.

In Bezug auf detaillierten Aufbau und genauer Funktion der Lackiervorrichtung wird auf die DE 10 2015 218 325.4 verwiesen.

Stromabwärts zu dem Lackwerk 43 ist der endlosen Deckbahn 9 eine Deckbahn-Inspektionsvorrichtung 49 zugeordnet, die die endlose Deckbahn 9 insbesondere auf ihrer Außenseite 23 auf Fehler hin inspiziert. Insbesondere erfolgt eine sensorische Inspektion der lackierten endlosen Deckbahn 9 in Hinblick auf Planheit bzw. Ebenheit. Die Deckbahn-Inspektionsvorrichtung 49 ist oberhalb der Deckbahn-Splicevorrichtung 2 angeordnet. In Bezug auf Details und Funktion der Deckbahn-Inspektionsvorrichtung 49 wird beispielsweise auf die WO 2014/128115 A1 verwiesen.

Stromabwärts zu der Deckbahn-Inspektionsvorrichtung 49 ist der endlosen Deckbahn 9 ein Kontrastsensor 50 zugeordnet, der den Kontrast der bedruckten und lackierten endlosen Deckbahn 9 sensiert.

Stromabwärts zu dem Kontrastsensor 50 ist der endlosen Deckbahn 9 eine Inkjet-Lackierungsvorrichtung 51 zugeordnet, die außenseitig auf die endlose Deckbahn 9 mindestens einen räumlich begrenzten Inkjetlackbereich 52, insbesondere aus transparenter Glanztinte, aufbringt. Die mindestens eine Überlackschicht 44 befindet sich zwischen dem mindestens einen Inkjetlackbereich 52 und der Vorbeschichtung 24. Günstigerweise bedeckt der mindestens eine Inkjetlackbereich 52 den mindestens einen Aufdruck 28 zumindest bereichsweise, wie z. B. entlang seiner Konturen oder vollflächig. Die Inkjet-Lackierungsvorrichtung 51 ist oberhalb der Deckbahn-Splicevorrichtung 2 angeordnet.

Alternativ oder zusätzlich ist der endlosen Deckbahn 9 eine Marken-Lesevorrichtung zugeordnet, die insbesondere imstande ist, außenseitige Marken der endlosen Deckbahn 9 zu lesen bzw. zu erfassen. Durch aufgebrachte Marken ist eine Positionssteuerung des mindestens einen Inkjetlackbereichs 52 möglich.

Stromabwärts zu der Inkjet-Lackierungsvorrichtung 51 ist der endlosen Deckbahn 9 eine Inkjetlackierungs-Trocknungsvorrichtung 53 zum Trocknen der endlosen Deckbahn 9 bzw. des mindestens einen Inkjetlackbereichs 52 zugeordnet. Die Inkjetlackierungs-Trocknungsvorrichtung 53 ist seitlich oberhalb der Deckbahn-Splicevorrichtung 2 angeordnet. Die Trocknung erfolgt vorzugsweise durch Infrarot-Strahlung und/oder Heissluft.

Zwischen der Inkjetlackierungs-Trocknungsvorrichtung 53 und der Inkjet-Lackierungsvorrichtung 51 befindet sich eine vierzehnte Umlenkrolle 54, die die endlose Deckbahn 9 um etwa 90° umlenkt und nach unten zu der Inkjetlackierungs-Trocknungsvorrichtung 53 führt.

Stromabwärts zu der Inkjetlackierungs-Trocknungsvorrichtung 53 ist der endlosen Deckbahn 9 eine Blitzeinheit 55 zugeordnet, die eine Passgenauigkeit der Inkjetlackbereiche 52 kontrolliert. Eine Überdruckgenauigkeit des mindestens einen Inkjetlackbereichs bezüglich des mindestens einen Aufdrucks 28 ist so feststellbar bzw. einstellbar.

Stromabwärts zu der Blitzeinheit 55 ist der endlosen Deckbahn 9 eine Glanzmessungseinheit 56 zugeordnet, die einen außenseitigen Glanz der endlosen Deckbahn 9 bzw. des mindestens einen Inkjetlackbereichs 52 misst.

Stromabwärts zu der Glanzmessungseinheit 56 ist der endlosen Deckbahn 9 eine Befeuchtungsvorrichtung 57 zugeordnet, die Wasser, insbesondere in Form von Sprühdampf, gegenüberliegend zu der Außenseite 23 der endlosen Deckbahn 9 auf die endlose Deckbahn 9 führt. Dadurch ist eine Planlage und ein homogenes Feuchteprofil der endlosen Deckbahn 9 gewährbar. Die Befeuchtungsvorrichtung 57 ist seitlich oberhalb der Deckbahn-Splicevorrichtung 2 angeordnet.

Zwischen der Glanzmessungseinheit 56 und der Befeuchtungsvorrichtung 57 ist eine fünfzehnte Umlenkrolle 58 angeordnet, die die endlose Deckbahn 9 um etwa 180° umlenkt und so nach oben zu der Rückbefeuchtungs-Vorrichtung 57 führt.

Stromabwärts zu der Rückbefeuchtungs-Vorrichtung 57 ist der endlosen Deckbahn 9 eine dritte Feuchte-Messeinrichtung 59 zugeordnet, die die Feuchte der endlosen Deckbahn 9 misst und entsprechend der ersten bzw. zweiten Feuchte-Messeinrichtung 41, 47 ausgebildet ist.

Die Vorbeschichtungs-Auftragsvorrichtung 22, die Vorbeschichtungs-Trocknungsvorrichtung 25, die Inkjet-Druckvorrichtung 27, die Inkjetdruck-Trocknungsvorrichtung 32, die Corona-Vorbehandlungsvorrichtung 34, die Inkjet-Lackierungsvorrichtung 51, die Deckbahn-Inspektionsvorrichtung 49, die Befeuchtungsvorrichtung 57 und die Feuchte-Messeinrichtungen 41, 47, 59 und der Kontrastsensor 50, die Blitzeinheit 55, die Glanzmessungseinheit 56 bilden zusammen eine Druckanordnung. Über das Zutrittspodest 19 ist die Druckanordnung gut erreichbar.

Die Druckanordnung ist zumindest größtenteils oberhalb der Deckbahn-Splicevorrichtung 2 an einem Traggestell 62 angeordnet, das gegenüber dem Untergrund 17 abgestützt ist. Günstigerweise hat das Traggestell 62 ein eigenes Fundament.

Mit Ausnahme der Vorbeschichtungs-Auftragsvorrichtung 22 sind sämtliche Komponenten der Druckanordnung von dem Traggestell 62 oberhalb der Deckbahn-Splicevorrichtung 2 getragen.

Über die weiteren Umlenkrollen 60 wird die endlose Deckbahn 9 aus der Druckanordnung geführt. Über die weiteren Umlenkrollen 60 wird die endlose Deckbahn nach unten in Richtung auf den Untergrund 17 geführt.

Die endlose Deckbahn 9 wird dann über eine Heizwalze 61 und über eine weitere Umlenkrolle 63 in die Vorrichtung 1 zum Herstellen einer einseitig kaschierten Wellpappebahn geführt. Die Heizwalze 61 bewirkt hier neben dem Aufheizen und Entfeuchten des Papieres eine Glättung der endlosen Deckbahn 9 vor. Die endlose Zwischenbahn 15 wird über eine weitere Umlenkrolle 64 ebenfalls der Vorrichtung 1 zum Herstellen einer einseitig kaschierten Wellpappebahn zugeführt.

Die Vorrichtung 1 zum Herstellen einer einseitig kaschierten Wellpappebahn umfasst zum Erzeugen einer eine Wellung aufweisenden, endlosen Wellbahn 65 aus der endlosen Zwischenbahn 15 eine drehbar gelagerte erste Riffelwalze 66 und eine drehbar gelagerte zweite Riffelwalze 67. Die Riffelwalzen 66, 67 bilden zum Durchführen und Riffeln der endlosen Zwischenbahn 15 einen Walzenspalt aus. Die Drehachsen der beiden Riffelwalzen 66, 67 verlaufen parallel zueinander. Die Riffelwalzen 66, 67 bilden zusammen eine Riffeleinrichtung.

Zum Verbinden der endlosen Wellbahn 65 mit der endlosen Deckbahn 9 zu einer einseitig kaschierten, endlosen Wellpappebahn 68 weist die Vorrichtung 1 zum Herstellen einer einseitig kaschierten Wellpappebahn eine Leimauftragseinrichtung 69 auf, die wiederum eine Leimdosierwalze 70, einen Leimbehälter 71 und eine Leimauftragswalze 72 umfasst. Zum Durchführen und Beleimen der endlosen Wellbahn 65 bildet die Leimauftragswalze 72 mit der ersten Riffelwalze 66 einen Beleimungsspalt aus. Der sich in dem Leimbehälter 71 befindende Leim wird über die Leimauftragswalze 72 auf Spitzen der Wellungen der endlosen Wellbahn 65 aufgetragen. Die Leimdosierwalze 70 liegt gegen die Leimauftragswalze 72 an und dient zum Ausbilden einer gleichmäßigen Leimschicht auf der Leimauftragswalze 72.

Die endlose Deckbahn 9 wird anschließend mit der mit Leim aus dem Leimbehälter 71 versehenen, endlosen Wellbahn 65 in der Vorrichtung 1 zum Herstellen einer einseitig kaschierten Wellpappebahn unter Bildung der einseitig kaschierten Wellpappebahn 68 zusammengefügt.

Zum Anpressen der endlosen Deckbahn 9 gegen die mit Leim versehene, endlose Wellbahn 65, die wiederum bereichsweise an der ersten Riffelwalze 66 anliegt, hat die Vorrichtung 1 zum Herstellen einer einseitig kaschierten Wellpappebahn eine Anpresseinrichtung 73. Die Anpresseinrichtung 73 ist als Anpressbandmodul ausgeführt und ist oberhalb der ersten Riffelwalze 66 angeordnet. Das Anpressbandmodul 73 hat zwei Umlenkwalzen 74, sowie ein endloses, glattes Anpressband 75, das um die beiden Umlenkwalzen 74 geführt ist und aus einem Metallmaterial besteht. Die erste Riffelwalze 66 greift in einen zwischen den Umlenkwalzen 74 vorliegenden Raum bereichsweise von unten ein, wodurch das Anpressband 75 durch die erste Riffelwalze 66 umgelenkt wird. Das Anpressband 75 drückt gegen die endlose Deckbahn 9, die wiederum gegen die mit Leim versehene, an der ersten Riffelwalze 66 anliegende, endlose Wellbahn 65 gepresst wird.

Zum Zwischenspeichern und Puffern der einseitig kaschierten, endlosen Wellpappebahn 68 wird diese über eine Hochtransporteinrichtung 76 einer Speichereinrichtung 77 zugeführt, wo diese Schleifen bzw. Schlaufen ausbildet.

Ferner hat die Wellpappeanlage eine Kaschierbahn-Splicevorrichtung 78, die entsprechend der Deckbahn-Splicevorrichtung 2 bzw. der Zwischenbahn-Splicevorrichtung 3 ausgebildet ist. Die Kaschierbahn-Splicevorrichtung 78 umfasst zum Abrollen einer endlichen ersten Kaschierbahn 79 von einer ersten Kaschierbahnrolle 80 eine fünfte Abrolleinheit 81 und zum Abrollen einer endlichen zweiten Kaschierbahn von einer zweiten Kaschierbahnrolle 82 eine sechste Abrolleinheit 83. Die endliche erste Kaschierbahn 79 und die zweite Kaschierbahn werden zum Bereitstellen einer endlosen Kaschierbahn 84 mittels einer nicht dargestellten Verbinde- und Schneideinheit der Kaschierbahn-Splicevorrichtung 78 miteinander verbunden.

Stromabwärts zu der Speichereinrichtung 77 und der Kaschierbahn-Splicevorrichtung 78 befindet sich eine Vorheizvorrichtung 85, die zwei übereinander angeordnete Vorheizwalzen 86 umfasst. Der Vorheizvorrichtung 85 werden die einseitig kaschierte Wellpappebahn 68 und die endlose Kaschierbahn 84 zugeführt, die beide teilweise die jeweilige Vorheizwalze 86 umschlingen. Die endlose Kaschierbahn 84 läuft in der Vorheizvorrichtung 85 unterhalb der einseitig kaschierten Wellpappebahn 68, wobei die Außenseite 23 der endlosen Deckbahn 9 nach oben bzw. außen gewandt ist.

Stromabwärts zu der Vorheizvorrichtung 85 ist ein Leimwerk 87 mit einer Beleimungswalze 88 angeordnet, die teilweise in ein Leimbad eingetaucht ist. Die einseitig kaschierte Wellpappebahn 68 befindet sich mit ihrer Wellbahn 65 in Kontakt mit der Beleimungswalze 88 und wird so mit Leim aus dem Leimbad versehen. An der Beleimungswalze 88 liegt umfangsseitig eine Dosierwalze 89 an, um einen gleichmäßigen Leimfilm auf der Beleimungswalze 88 auszubilden. Die endlose Kaschierbahn 84 läuft in dem Leimwerk 87 unterhalb der einseitig kaschierten Wellpappebahn 68.

Stromabwärts zu dem Leimwerk 87 ist eine Heiz-Andrück-Vorrichtung 90 angeordnet, die einen horizontal verlaufenden Heiztisch 91 mit Heizelementen umfasst. Benachbart zu dem Heiztisch 91 ist ein über Führungswalzen 92 geführter Andrückgurt 93 angeordnet. Zwischen dem Andrückgurt 93 und dem Heiztisch 91 ist ein Andrückspalt gebildet, durch den die einseitig kaschierte, beleimte Wellpappebahn 68 und die endlose Kaschierbahn 84 geführt sind. In der Heiz-Andrück-Vorrichtung 90 wird eine zweiseitig kaschierte, endlose Wellpappebahn 94 gebildet, die außenseitig bedruckt und überlackiert ist.

Stromabwärts zu der Heiz-Andrück-Vorrichtung 90 sind eine Längsschneide-/Rillvorrichtung (nicht dargestellt) zum Längsschneiden und Rillen der Wellpappebahn 94, eine Querschneidevorrichtung zum Querschneiden der Wellpappebahn 94, eine Weiche (nicht dargestellt) zum Aufteilen von aus der Wellpappebahn 94 erzeugten Teil-Wellpappebahnen in verschiedene Ebenen und Querschneidevorrichtungen (nicht dargestellt) zum Querschneiden der Teil-Wellpappebahnen in Wellpappebögen sowie Stapelvorrichtungen (nicht dargestellt) zum Stapeln der Wellpappebögen angeordnet.

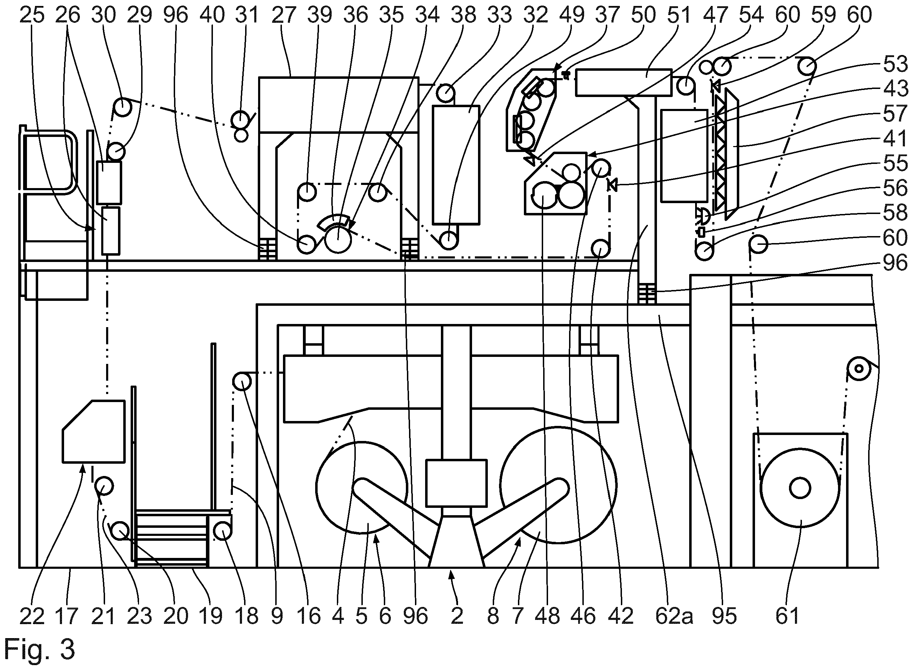

Nachfolgend wird unter Bezugnahme auf Fig.3 eine weitere Ausführungsform beschrieben. Identische Teile erhalten dieselben Bezugszeichen wie bei der vorherigen Ausführungsform, auf deren Beschreibung verwiesen wird. Konstruktiv unterschiedliche, aber funktionell gleichartige Teile erhalten dieselben Bezugszeichen mit einem nachgeordneten "a".

Im Gegensatz zu der vorherigen Ausführungsform ist das die Druckanordnung tragende Traggestell 62a gegenüber einer Wellpappeanlagen-Brücke 95 schwingungsentkoppelt. Dafür sind mehrere Schwingungsentkopplungselemente 96 vorgesehen, die zwischen der Druckanordnung bzw. dem Traggestell 62a und der Wellpappeanlagen-Brücke 95 angeordnet sind. Günstigerweise stützt sich das Traggestell 62a über die Schwingungsentkopplungselemente 96 gegenüber der Wellpappeanlagen-Brücke 95 ab. Alternativ sind die Schwingungsentkopplungselemente 96 in das Traggestell 62a und/oder die Wellpappeanlagen-Brücke 95 eingesetzt.

Die Wellpappeanlagen-Brücke 95 verläuft oberhalb der Deckbahn-Splicevorrichtung 2. Sie verläuft zwischen der Druckanordnung und der Deckbahn-Splicevorrichtung 2. Die Wellpappeanlagen-Brücke 95 wiederum ist gegenüber einem Untergrund abgestützt.

## Patentansprüche

1. Wellpappeanlage zum Herstellen von Wellpappe, mit
a) einer Zwischenbahn-Abgabevorrichtung (3) zum Abgeben einer Zwischenbahn (15),
b) einer Deckbahn-Abgabevorrichtung (2) zum Abgeben einer Deckbahn (9),
c) einer der Deckbahn-Abgabevorrichtung (2) nachgeordnete Druckanordnung zum Bedrucken der Deckbahn (9), wobei die Druckanordnung zumindest teilweise oberhalb der Deckbahn-Abgabevorrichtung (2) angeordnet ist,
d) einer der Zwischenbahn-Abgabevorrichtung (3) und der Druckanordnung nachgeordnete Vorrichtung (1) zum Herstellen einer einseitig kaschierten Wellpappebahn (68) aus der Zwischenbahn (15) und der Deckbahn (9),
e) einer Kaschierbahn-Abgabevorrichtung (78) zum Abgeben einer Kaschierbahn (84), und
f) einer Verbindungsvorrichtung (90) zum Verbinden der einseitig kaschierten Wellpappebahn (68) und der Kaschierbahn (84) unter Bildung einer mindestens dreilagigen Wellpappebahn (94) miteinander,
**dadurch gekennzeichnet, dass**
g) sich die Druckanordnung zumindest bereichsweise über der Deckbahn-Abgabevorrichtung (2) erstreckt,
h) die Wellpappeanlage mindestens ein Traggestell (62; 62a) zum mindestens teilweisen Tragen der Druckanordnung umfasst, und
i) das mindestens eine Traggestell (62; 62a) separat zu einer Wellpappeanlagen-Brücke (95) ausgebildet ist, die eine Speichervorrichtung (77) zum Speichern der einseitig kaschierten Wellpappebahn (68) trägt.

2. Wellpappeanlage nach Anspruch 1, **dadurch gekennzeichnet, dass** die Deckbahn-Abgabevorrichtung (2) als Splicevorrichtung zum Abgeben einer endlosen Deckbahn (9) ausgebildet ist.

3. Wellpappeanlage nach Anspruch 1 oder 2, **dadurch gekennzeichnet, dass** die Druckanordnung zumindest größtenteils oberhalb der Deckbahn-Abgabevorrichtung (2) angeordnet ist.

4. Wellpappeanlage nach einem der vorherigen Ansprüche, **dadurch gekennzeichnet, dass** die Druckanordnung eine Druckvorrichtung (27) zum Bedrucken der Deckbahn (9) umfasst.

5. Wellpappeanlage nach Anspruch 4, **dadurch gekennzeichnet, dass** die Druckvorrichtung (27) als Inkjet-Druckvorrichtung ausgeführt ist.

6. Wellpappeanlage nach Anspruch 4 oder 5, **dadurch gekennzeichnet, dass** die Druckanordnung eine der Druckvorrichtung (27) nachgeordnete Druck-Trocknungsvorrichtung (32) zum Trocknen der Deckbahn (9) umfasst.

7. Wellpappeanlage nach einem der vorherigen Ansprüche, **dadurch gekennzeichnet, dass** zwischen der Druckanordnung und der Vorrichtung (1) zum Herstellen einer einseitig kaschierten Wellpappebahn (68) eine Heizeinrichtung (61) zum Vorheizen der Deckbahn (9) angeordnet ist.

8. Wellpappeanlage nach einem der vorherigen Ansprüche, **dadurch gekennzeichnet, dass** zwischen der Druckanordnung und der Vorrichtung (1) zum Herstellen einer einseitig kaschierten Wellpappebahn (68) eine Deckbahn-Aufwickeleinrichtung zum Aufwickeln der Deckbahn (9) angeordnet ist.

9. Wellpappeanlage nach einem der vorherigen Ansprüche, **dadurch gekennzeichnet, dass** zwischen dem mindestens einen Traggestell (62a) und der Wellpappeanlagen-Brücke (95) mindestens ein Schwingungsentkopplungselement (96) zum mindestens teilweisen, insbesondere vollständigen, Schwingungsentkoppeln des mindestens einen Traggestells (62a) gegenüber der Wellpappeanlagen-Brücke (95) angeordnet ist.

10. Wellpappeanlage nach einem der vorherigen Ansprüche, **dadurch gekennzeichnet, dass** die Druckvorrichtung (27) wasserbasierte Inkjetfarbe auf die Deckbahn (9) aufbringt und die Deckbahn (9) anschließend mit einem Überlack auf Wasserbasis versehen wird, wobei der Überlack durch ein konventionelles Lackwerk oder/und einer Inkjet-Druckvorrichtung auf die Deckbahn (9) aufgebracht wird.

## Claims

1. Corrugated board system for producing corrugated board, having
a) an intermediate-web dispensing device (3) for dispensing an intermediate web (15);
b) a cover-web dispensing device (2) for dispensing a cover web (9);
c) a printing assembly, disposed downstream of the cover-web dispensing device (2), for printing the cover web (9), wherein the printing assembly is at least in part disposed above the cover-web dispensing device (2);
d) a device (1), disposed downstream of the intermediate-web dispensing device (3) and the printing assembly, for producing from the intermediate web (15) and the cover web (9) a corrugated board web (68) laminated on one side;
e) a lamination-web dispensing device (78) for dispensing a lamination web (84); and
f) a connecting device (90) for connecting the corrugated board web (68) laminated on one side and the lamination web (84) to one another while forming an at least three-ply corrugated board web (94),
**characterized in that**
g) the printing assembly at least in regions extends over the cover-web dispensing device (2);
h) the corrugated board system comprises at least one support frame (62; 62a) for at least in part supporting the printing assembly; and
i) the at least one support frame (62; 62a) is configured so as to be separate from a corrugated board system bridge (95) which supports an accumulator device (77) for accumulating the corrugated board web (68) laminated on one side.

2. Corrugated board system according to Claim 1, **characterized in that** the cover-web dispensing device (2) is configured as a splicing device for dispensing a continuous cover web (9).

3. Corrugated board system according to Claim 1 or 2, **characterized in that** the printing assembly is at least to a large part disposed above the cover-web dispensing device (2).

4. Corrugated board system according to one of the preceding claims, **characterized in that** the printing assembly comprises a printing device (27) for printing the cover web (9).

5. Corrugated board system according to Claim 4, **characterized in that** the printing device (27) is embodied as an inkjet printing device.

6. Corrugated board system according to Claim 4 or 5, **characterized in that** the printing assembly for drying the cover web (9) comprises a print-drying device (32), disposed downstream of the printing device (27).

7. Corrugated board system according to one of the preceding claims, **characterized in that** for pre-heating the cover web (9) a heating installation (61) is disposed between the printing assembly and the device (1) for producing a corrugated board web (68) laminated on one side.

8. Corrugated board system according to one of the preceding claims, **characterized in that** for winding the cover web (9) a cover-web winding installation is disposed between the printing assembly and the device (1) for producing a corrugated board web (68) laminated on one side.

9. Corrugated board system according to one of the preceding claims, **characterized in that** for at least partially, in particularly completely, decoupling in terms of vibrations the at least one support frame (62a) in relation to the corrugated board system bridge (95), at least one vibration-decoupling element (96) is disposed between the at least one support frame (62a) and the corrugated board system bridge (95).

10. Corrugated board system according to one of the preceding claims, **characterized in that** the printing device (27) applies water-based inkjet ink to the cover web (9) and the cover web (9) is subsequently provided with a water-based lacquer top coat, wherein the lacquer top coat is applied to the cover web (9) by a conventional lacquer-application unit and/or an inkjet printing device.

## Revendications

1. Onduleuse pour la production de carton ondulé, comprenant
a) un dispositif intermédiaire de distribution de bande intermédiaire (3) destiné à distribuer une bande intermédiaire (15),
b) un dispositif de distribution de bande de recouvrement (2) destiné à distribuer une bande de recouvrement (9),
c) un ensemble d'impression monté en aval du dispositif de distribution de bande de recouvrement (2), destiné à imprimer la bande de recouvrement (9), dans lequel l'ensemble d'impression est disposé au moins en partie au-dessus du dispositif de distribution de bande de recouvrement (2),
d) un dispositif (1) monté en aval du dispositif de distribution de bande intermédiaire (3) et de l'ensemble d'impression, destiné à fabriquer une bande de carton ondulé (68) contrecollée d'un côté à partir de la bande intermédiaire (15) et de la bande de recouvrement (9),
e) un dispositif de distribution de bande de contrecollage (78) destiné à distribuer une bande de contrecollage (84), et
f) un dispositif de liaison (90) destiné à relier ensemble la bande de carton ondulé (68) contrecollée d'un côté et la bande de contrecollage (84) pour former une bande de carton ondulé (94) d'au moins trois couches, **caractérisée en ce que**
g) l'ensemble d'impression s'étend au moins par endroits au-dessu du dispositif de distribution de bande de recouvrement (2),
h) l'onduleuse comporte au moins un cadre porteur (62 ; 62a) destiné à porter au moins en partie l'ensemble d'impression, et
i) l'au moins un cadre porteur (62 ; 62a) est réalisé séparément d'un pont d'onduleuse (95), qui porte un dispositif de stockage (77) destiné à stocker la bande de carton ondulé (68) contrecollée d'un côté.

2. Onduleuse selon la revendication 1, **caractérisée en ce que** le dispositif de distribution de bande de recouvrement (2) est réalisé sous la forme d'un dispositif de raccordement destiné à distribuer une bande de recouvrement (9) sans fin.

3. Onduleuse selon la revendication 1 ou 2, **caractérisée en ce que** l'ensemble d'impression est disposé au moins en majeure partie au-dessus du dispositif de distribution de bande de recouvrement (2).

4. Onduleuse selon l'une quelconque des revendications précédentes, **caractérisée en ce que** l'ensemble d'impression comporte un dispositif d'impression (27) destiné à imprimer la bande de recouvrement (9).

5. Onduleuse selon la revendication 4, **caractérisée en ce que** le dispositif d'impression (27) est réalisé sous la forme d'un dispositif d'impression à jet d'encre.

6. Onduleuse selon la revendication 4 ou 5, **caractérisée en ce que** l'ensemble d'impression comporte un dispositif de séchage d'impression (32) monté en aval du dispositif d'impression (27), destiné à sécher la bande de recouvrement (9).

7. Onduleuse selon l'une quelconque des revendications précédentes, **caractérisé en ce qu'**un dispositif de chauffage (61) destiné à préchauffer la bande de recouvrement (9) est disposé entre l'ensemble d'impression et le dispositif (1) destiné à fabriquer une bande de carton ondulé (68) contrecollée d'un côté.

8. Onduleuse selon l'une quelconque des revendications précédentes, **caractérisée en ce qu'**un dispositif d'enroulement de bande de recouvrement destiné à enrouler la bande de recouvrement (9) est disposé entre l'ensemble d'impression et le dispositif (1) destiné à fabriquer une bande de carton ondulé (68) contrecollée d'un côté.

9. Onduleuse selon l'une quelconque des revendications précédentes, **caractérisée en ce qu'**au moins un élément d'isolation vibratoire (96) permettant l'isolation vibratoire au moins partielle, en particulier complète, de l'au moins un cadre porteur (62a) par rapport au pont d'onduleuse (95), est disposé entre l'au moins un cadre porteur (62a) et le pont d'onduleuse (95).

10. Onduleuse selon l'une quelconque des revendications précédentes, **caractérisée en ce que** le dispositif d'impression (27) applique de l'encre à jet d'encre à base d'eau sur la bande de recouvrement (9) et la bande de recouvrement (9) est munie ensuite d'un sur-vernis à base d'eau, dans laquelle le sur-vernis est appliqué sur la bande de recouvrement (9) par un mécanisme de vernissage classique et/ou un dispositif d'impression à jet d'encre.
